(19) Europäisches Patentamt
European Patent Office
Office européen des brevets

(11) **EP 4 334 747 B1**

(12) **EUROPÄISCHE PATENTSCHRIFT**

(45) Veröffentlichungstag und Bekanntmachung des Hinweises auf die Patenterteilung:
**11.06.2025 Patentblatt 2025/24**

(21) Anmeldenummer: **22723340.0**

(22) Anmeldetag: **05.04.2022**

(51) Internationale Patentklassifikation (IPC):
*G01S 15/00* $^{(2020.01)}$   *G01S 15/931* $^{(2020.01)}$
*G01S 15/46* $^{(2006.01)}$   *G01S 15/87* $^{(2006.01)}$

(52) Gemeinsame Patentklassifikation (CPC):
**G01S 15/003; G01S 15/006; G01S 15/46;**
**G01S 15/878; G01S 15/931;** G01S 2015/465

(86) Internationale Anmeldenummer:
**PCT/DE2022/200064**

(87) Internationale Veröffentlichungsnummer:
**WO 2022/233371 (10.11.2022 Gazette 2022/45)**

(54) **VERFAHREN ZUR BESTIMMUNG DER LAGE EINES OBJEKTS**

METHOD FOR DETERMINING THE POSITION OF AN OBJECT

PROCÉDÉ DE DÉTERMINATION DE LA POSITION D'UN OBJET

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **07.05.2021 DE 102021204635**

(43) Veröffentlichungstag der Anmeldung:
**13.03.2024 Patentblatt 2024/11**

(73) Patentinhaber: **Continental Autonomous Mobility Germany GmbH**
**85057 Ingolstadt (DE)**

(72) Erfinder: **REICHARDT, Benjamin**
**90411 Nürnberg (DE)**

(74) Vertreter: **Continental Corporation**
**c/o Continental Automotive GmbH**
**Intellectual Property**
**Nordostpark 30**
**90411 Nürnberg (DE)**

(56) Entgegenhaltungen:
**WO-A1-2020/012852     DE-A1- 102016 105 022**

• **DIRK BANK ET AL: "High-Resolution Ultrasonic Environment Imaging", IEEE TRANSACTIONS ON ROBOTICS, IEEE SERVICE CENTER, PISCATAWAY, NJ, US, vol. 23, no. 2, 1 April 2007 (2007-04-01), pages 370 - 381, XP011176810, ISSN: 1552-3098, DOI: 10.1109/TRO.2007.895060**

## Beschreibung

Die Erfindung betrifft ein Verfahren und ein System zur Bestimmung der Lage eines Objekts im Umgebungsbereich eines Fahrzeugs.

Es ist grundsätzlich bekannt, die Lage von Objekten im Umgebungsbereich eines Fahrzeugs mittels mehrerer Sensoren, die lediglich eine Entfernungsmessung, nicht aber eine Richtungsbestimmung ermöglichen, und einem Tracking-Verfahren, bei dem mehrere Reflexionen in mehreren aufeinanderfolgenden Sende-Empfangszyklen ermittelt werden, zu bestimmen.

Dabei wird häufig beim Erfassen einer Reflexion an einem zweiten Sensor, die aus einem Sendesignal eines ersten Sensors, der an einem anderen Ort angeordnet ist als der zweite Sensor, resultiert, davon ausgegangen, dass sich das Objekt auf einem Kreis befindet. Dies ist eine näherungsweise Betrachtung, da die potentiell möglichen Positionen des Objekts, an dem die Reflexion aufgetreten ist, auf einer Ellipse um die erste und zweite Sensorposition liegen. Da die bei den Tracking-Verfahren nötigen Berechnungen bei der Verwendung von Ellipsen sehr komplex werden und dadurch hohe Rechenkapazität benötigen, wird diese Ellipse durch einen Kreis approximiert, dessen Mittelpunkt mittig auf der Verbindungslinie zwischen erster und zweiter Sensorposition liegt.

Aus DE 10 2016 105 022 A1 ist ein Verfahren zum Erfassen zumindest eines Objekts in einer Umgebung eines Kraftfahrzeugs bekannt. Dazu wird ein erster Sensor zum Aussenden eines Sensorsignals angesteuert und mit einem zweiten Sensor werden Sensordaten empfangen, welche das von dem zumindest einen Objekt reflektierte Sensorsignal beschreiben. Weiterhin ist es vorgesehen, dass aus den Sensordaten ein unscharfes Merkmal als Objektmerkmal zur Beschreibung des zumindest einen Objekts bestimmt wird, wobei das unscharfe Merkmal einen Abstand zwischen dem zumindest einen Objekt und einer Position des ersten Sensors und/oder einer Position des zweiten Sensors beschreibt. Das unscharfe Merkmal wird als Ellipse beschrieben, wobei Brennpunkte der Ellipse anhand der Position des ersten Sensors und des zweiten Sensors bestimmt werden. Weiterhin wird eine große Halbachse der Ellipse anhand einer Laufzeit des Sensorsignals bestimmt und eine Länge einer kleinen Halbachse der Ellipse wird anhand der Brennpunkte und der Länge der großen Halbachse bestimmt.

Aus WO 2020/012852 A1 ist eine Positionierungsunterstützungsvorrichtung zum Ermöglichen einer Verbesserung der Positionsgenauigkeit eines Objekts durch Berechnen der Position entsprechend der Form des Objekts bekannt. Die Vorrichtung umfasst eine Einheit zur Identifizierung der Position des peripheren Objekts auf der Grundlage eines Schnittpunkts, der von einer Einheit zur Berechnung der Schnittpunktposition berechnet wird. Die Einheit zur Identifizierung der Position des peripheren Objekts ermittelt ein erstes Liniensegment, das Schnittpunkte eines Kreises und einer Ellipse verbindet, die erhalten werden, wenn ein bestimmter Entfernungsmesssensor zum Empfang eines selbst ausgesendeten Signals angetrieben wird. Weiterhin ermittelt die Einheit zur Identifizierung der Position des peripheren Objekts ein zweites Liniensegment, das Schnittpunkte eines Kreises und einer Ellipse verbindet, die erhalten werden, wenn der bestimmte Entfernungsmesssensor zum Empfang eines Kreuzechos angetrieben wird. Die Position des Objekts wird anschließend auf der Grundlage des ersten Liniensegments und des zweiten Liniensegments bestimmt.

In dem Artikel von D. Bank and T. Kampke, "High-Resolution Ultrasonic Environment Imaging," in IEEE Transactions on Robotics, vol. 23, no. 2, pp. 370-381, April 2007, wird ein Verfahren zum Ermitteln hochauflösender Abbilder einer Umgebung eines Fahrzeugs beschrieben, bei dem linienförmige Segmente ermittelt werden, welche die Grenzen geometrischer Umgebungsobjekte beschreiben.

Die Approximation der Ellipse durch einen Kreis hat den Nachteil, dass die Berechnungsgenauigkeit abnimmt und dadurch ungenaue und wenig stabile Konturen eines Objekts in der Umgebung des Fahrzeugs entstehen. Teilweise führen diese Berechnungsungenauigkeiten dazu, dass Reflektionen fälschlicherweise nicht mehr einem Objekt zugeordnet werden.

Ausgehend hiervon ist es Aufgabe der Erfindung, ein Verfahren zur Berechnung der Lage eines Objekts anzugeben, das eine hohe Genauigkeit bei gleichzeitig niedriger Rechenkomplexität aufweist.

Die Aufgabe wird durch ein Verfahren mit den Merkmalen des unabhängigen Patentanspruchs 1 gelöst. Bevorzugte Ausführungsformen sind Gegenstand der Unteransprüche. Ein System zur Berechnung der Lage eines Objekts ist Gegenstand des nebengeordneten Patentanspruchs 7.

Gemäß einem ersten Aspekt bezieht sich die Erfindung auf ein Verfahren zur Bestimmung der Lage eines Objekts durch eine Sensorik eines Fahrzeugs. Das Fahrzeug weist zumindest einen ersten Sensor mit einer ersten Sensorposition und einen zweiten Sensor mit einer zweiten, von der ersten Sensorposition verschiedenen Sensorposition auf. Das Verfahren umfasst die folgenden Schritte: Zunächst wird zumindest ein Teilbereich einer Ellipse berechnet, wobei die Ellipse durch Punkte gebildet wird, bei denen die Wegstrecke von der ersten Sensorposition über den jeweiligen Punkt zur zweiten Sensorposition konstant ist. In anderen Worten liegen die Punkte, an denen ein am ersten Sensor transmittiertes Signal reflektiert werden muss, um an dem zweiten Sender empfangen zu werden und dabei die Signallaufzeit konstant ist, auf einer Ellipse um die erste und zweite Sensorposition.

Anschließend wird ein Ellipsenabschnitt bestimmt, der sowohl im Erfassungsbereich des ersten Sensors als auch im Erfassungsbereich des zweiten Sensors liegt. Der Ellipsenabschnitt weist dabei einen ersten und einen zweiten Ellipsenendpunkt auf.

Daraufhin wird ein Ellipsenabschnittzwischenpunkt bestimmt, der sich auf einer Mittelsenkrechten zu der Verbindungsgeraden zwischen dem ersten und zweiten Ellipsenendpunkt befindet.

Anschließend wird ein Kreisabschnitt bestimmt, der durch den ersten und zweiten Ellipsenendpunkt und den Ellipsenabschnittzwischenpunkt verläuft.

Zuletzt wird die Lage des Objekts basierend auf dem Kreisabschnitt bestimmt.

Der technische Vorteil des erfindungsgemäßen Verfahrens besteht darin, dass die Ellipse durch einen Kreis approximiert wird, der möglichst exakt auf die Form der Ellipse in dem Bereich angepasst ist, der durch beide Sensoren erfassbar ist. Dadurch können die Ungenauigkeiten in der Lagebestimmung aufgrund der Approximation der Ellipse durch einen Kreis bzw. Kreisabschnitt signifikant reduziert werden.

Gemäß einem Ausführungsbeispiel erstreckt sich der Ellipsenabschnitt entlang des gesamten Überdeckungsbereichs des Erfassungsbereichs des ersten Sensors mit dem Erfassungsbereich des zweiten Sensors. Dadurch wird die Approximation der Ellipse durch den Kreis bzw. Kreisabschnitt in dem gesamten Bereich, in dem der potentielle Reflexionsort liegen kann, optimiert.

Gemäß einem Ausführungsbeispiel umfasst das Bestimmen des Kreises oder des Kreisabschnitts ein Berechnen des Radius des Kreisabschnitts und ein Bestimmen eines Mittelpunkts dieses Kreises oder dieses Kreisabschnitts.

Gemäß einem Ausführungsbeispiel wird der Mittelpunkt des Kreises oder des Kreisabschnitts dadurch bestimmt, dass derjenige Punkt auf der Mittelsenkrechten zu der Verbindungsgeraden zwischen dem ersten und zweiten Ellipsenendpunkt bestimmt wird, der einen Abstand gleich dem Radius des Kreises oder des Kreisabschnitts zu dem Ellipsenabschnittzwischenpunkt aufweist. Dadurch wird ein die Ellipse approximierender Kreis bzw. Kreisabschnitt erhalten, der durch die beiden Ellipsenendpunkte und den Ellipsenabschnittzwischenpunkt verläuft und damit die Ellipse im Erfassungsbereich beider Sensoren approximiert.

Gemäß einem Ausführungsbeispiel ist der erste und zweite Sensor ein Ultraschallsensor. Grundsätzlich sind auch andere Sensoren denkbar, insbesondere solche, die eine Entfernungsmessung ohne Richtungsbestimmung (1D-Sensoren) bieten.

Gemäß einem Ausführungsbeispiel wird die Position des Objekts relativ zum Fahrzeug durch iteratives Wiederholen der Verfahrensschritte eines der vorhergehenden Ausführungsbeispiele über mehrere Sende- und Empfangszyklen des ersten und zweiten Sensors hinweg bestimmt (sog. Tracking-Algorithmen). Durch derartige Verfahren lässt sich die Position eines Objekts auch dann bestimmen, wenn die Sensoren keine Bestimmung der Richtung ermöglichen, in der die Reflexion erfolgt ist.

Gemäß einem weiteren Aspekt betrifft die Erfindung ein System zur Bestimmung der Lage eines Objekts. Das System umfasst eine Sensorik, die an einem Fahrzeug angeordnet ist. Die Sensorik weist zumindest einen ersten Sensor mit einer ersten Sensorposition und einen zweiten Sensor mit einer zweiten, von der ersten Sensorposition verschiedenen Sensorposition auf. Das System weist zudem eine Recheneinheit auf, die dazu konfiguriert ist, die folgenden Schritte zu vollziehen:

Berechnen zumindest eines Teilbereichs einer Ellipse, wobei die Ellipse durch Punkte gebildet wird, bei denen die Wegstrecke von der ersten Sensorposition über den jeweiligen Punkt zur zweiten Sensorposition konstant ist;
Bestimmen eines Ellipsenabschnitts, der sowohl im Erfassungsbereich des ersten Sensors als auch im Erfassungsbereich des zweiten Sensors liegt, wobei der Ellipsenabschnitt einen ersten und einen zweiten Ellipsenendpunkt aufweist;
Bestimmen eines Ellipsenabschnittzwischenpunkts, der sich auf einer Mittelsenkrechten zu der Verbindungsgeraden zwischen dem ersten und zweiten Ellipsenendpunkt befindet;
Bestimmen eines Kreises oder Kreisabschnitts, der durch den ersten und zweiten Ellipsenendpunkt und den Ellipsenabschnittzwischenpunkt verläuft; und
Bestimmen der Lage des Objekts basierend auf dem Kreis oder dem Kreisabschnitt.

Gemäß einem Ausführungsbeispiel des Systems erstreckt sich der Ellipsenabschnitt entlang des gesamten Überdeckungsbereichs des Erfassungsbereichs des ersten Sensors mit dem Erfassungsbereich des zweiten Sensors. Dadurch wird die Approximation der Ellipse durch den Kreis bzw. Kreisabschnitt in dem gesamten Bereich, in dem der potentielle Reflexionsort liegen kann, optimiert.

Gemäß einem Ausführungsbeispiel des Systems ist die Recheneinheit dazu konfiguriert, den Kreis oder den Kreisabschnitt dadurch zu bestimmen, dass ein Radius des Kreises oder des Kreisabschnitts berechnet und ein Mittelpunkt dieses Kreises oder dieses Kreisabschnitts bestimmt wird.

Gemäß einem Ausführungsbeispiel des Systems ist die Recheneinheit dazu konfiguriert, den Mittelpunkt des Kreises oder des Kreisabschnitts dadurch zu bestimmen, dass derjenige Punkt auf der Mittelsenkrechten zu der Verbindungsgeraden zwischen dem ersten und zweiten Ellipsenendpunkt bestimmt wird, der einen Abstand gleich dem Radius des Kreises oder des Kreisabschnitts zu dem Ellipsenabschnittzwischenpunkt aufweist. Dadurch wird ein die Ellipse approximierender Kreis bzw. Kreisabschnitt erhalten, der durch die beiden Ellipsenendpunkte und den Ellipsenabschnittzwischenpunkt verläuft und damit die Ellipse im Erfassungsbereich beider Sensoren approximiert.

Gemäß einem Ausführungsbeispiel des Systems ist der erste und zweite Sensor ein Ultraschallsensor. Grundsätzlich sind auch andere Sensoren denkbar, insbesondere solche, die eine Entfernungsmessung ohne Richtungsbestimmung (1D-Sensoren) bieten.

Gemäß einem Ausführungsbeispiel des Systems ist die Recheneinheit dazu ausgebildet, die Position eines Objekts relativ zum Fahrzeug durch iteratives Bestimmen eines Kreises oder eines Kreisabschnitts über mehrere Sende- und Empfangszyklen des ersten und zweiten Sensors hinweg zu ermitteln (sog. Tracking-Algorithmen). Durch derartige Verfahren lässt sich die Position eines Objekts auch dann bestimmen, wenn die Sensoren keine Bestimmung der Richtung ermöglichen, in der die Reflexion erfolgt ist.

Die Ausdrücke "näherungsweise", "im Wesentlichen" oder "etwa" bedeuten im Sinne der Erfindung Abweichungen vom jeweils exakten Wert um +/- 10%, bevorzugt um +/- 5% und/oder Abweichungen in Form von für die Funktion unbedeutenden Änderungen.

Weiterbildungen, Vorteile und Anwendungsmöglichkeiten der Erfindung ergeben sich auch aus der nachfolgenden Beschreibung von Ausführungsbeispielen und aus den Figuren. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung. Auch wird der Inhalt der Ansprüche zu einem Bestandteil der Beschreibung gemacht.

Die Erfindung wird im Folgenden anhand der Figuren an Ausführungsbeispielen näher erläutert. Es zeigen:

Fig. 1 beispielhaft eine Draufsichtdarstellung eines Fahrzeugs mit einem Umgebungserfassungssystem, das mehrere Sensoren aufweist;

Fig. 2 beispielhaft eine schematische Darstellung einer Erfassungssituation mit zwei zueinander beabstandeten Sensoren, bei denen die Ellipse, auf der sich das reflektierende Objekt befinden könnte, durch Kreise approximiert wird, deren Mittelpunkte mittig zwischen den Sensorpositionen liegen;

Fig. 3 beispielhaft und schematisch die Bestimmung eines Ellipsenabschnitts, der durch einen Kreis oder Kreisabschnitt approximiert werden soll;

Fig. 4 beispielhaft und schematisch die Bestimmung eines Ellipsenabschnittzwischenpunkts und die Bestimmung des Kreisradius und des Kreismittelpunkts zu dem Ellipsenabschnitt gemäß Fig. 3; und

Fig. 5 beispielhaft ein Blockdiagramm, das die Verfahrensschritte zur Bestimmung der Lage eines Objekts verdeutlicht.

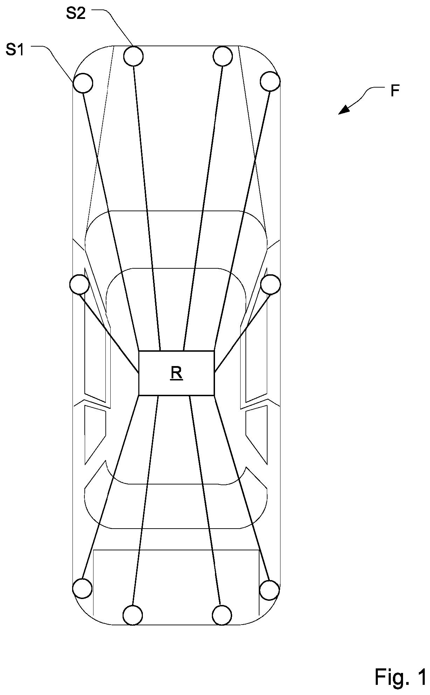

Figur 1 zeigt beispielhaft und grob schematisch ein Fahrzeug F, das eine Vielzahl von Sensoren aufweist. Insbesondere weist das Fahrzeug einen ersten Sensor S1 und einen zweiten Sensor S2 auf, die an unterschiedlichen Positionen am Fahrzeug vorgesehen sind. Vorzugsweise weist das Fahrzeug F mehr als zwei Sensoren auf, die um das Fahrzeug F herum verteilt vorgesehen sind. Die Sensoren können insbesondere entfernungsmessende Sensoren sein, beispielsweise Ultraschallsensoren. Alternativ können die Sensoren auch Radarsensoren oder LIDAR-Sensoren sein. Vorzugsweise weisen die Sensoren jedoch nicht die Fähigkeit auf, die Richtung zu bestimmen, aus der ein empfangener, reflektierter Signalanteil des Sendesignals stammt. Derartige Sensoren werden häufig als 1-D-Sensoren bezeichnet. Die Bestimmung der Entfernung eines Objekts, an dem die Reflexion auftritt, kann basierend auf der Laufzeit zwischen dem Sendezeitpunkt und dem Empfangszeitpunkt erfolgen.

Die Sensoren sind mit einer Rechnereinheit R gekoppelt, die zumindest einen Prozessor und zumindest eine Speichereinheit aufweist. Diese Rechnereinheit R ist dazu ausgebildet, die in diesem Dokument offenbarten Verfahrensabläufe durchzuführen und damit eine verbesserte Entfernungsbestimmung von detektierten Objekten zu erreichen.

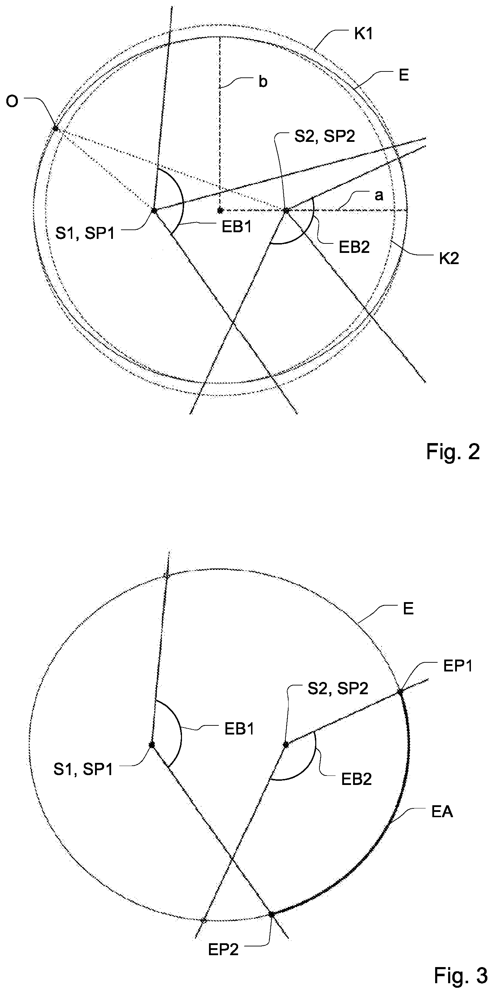

Fig. 2 zeigt eine schematische Draufsichtdarstellung auf eine Erfassungssituation, in der beispielsweise ein erster Sensor S1, der an einer ersten Sensorposition SP1 angeordnet ist, ein Sendesignal aussendet, an einem Objekt O eine Reflexion erfolgt und ein zweiter Sensor S2, der an einer zweiten Sensorposition SP2 vorgesehen ist, die von der ersten Sensorposition SP1 verschieden ist, einen reflektierten Anteil dieses Sendesignals empfängt.

Unter der Annahme einer linearen Ausbreitung des Sendesignals in der Umgebung des Fahrzeugs liegen die möglichen Punkte, an denen die Reflexion entstanden ist, auf einer Ellipse E, die in Fig. 2 als durchgezogene Linie eingezeichnet ist. Dies liegt darin begründet, dass die Wegstrecke zwischen der ersten Sensorposition SP1, einem beliebigen Punkt der Ellipse E und der zweiten Sensorposition SP2 konstant ist und damit aufgrund einer erfassten Signallaufzeit das reflektierende Objekt an jedem Punkt der Ellipse E liegen könnte.

Der erste Sensor weist einen ersten Erfassungsbereich EB1 und der zweite Sensor S2 einen zweiten Erfassungsbereich EB2 auf.

Da die Berechnung der Position des reflektierenden Objekts, die vorzugsweise durch ein Trackingverfahren basierend auf Informationen, die in mehreren aufeinanderfolgenden Sende-Empfangszyklen erhalten wurden, erfolgt, basierend auf Ellipsen komplexer ist und damit mehr Rechenzeit erfordert, wird häufig eine Approximation der Ellipse E durch einen Kreis bzw. ein Kreissegment vorgenommen. Dabei wird häufig als Mittelpunkt des Kreises bzw. des Kreissegments ein Punkt auf der Verbindungsgeraden zwischen der ersten und zweiten Sensorposition SP1, SP2 angenommen, der zu der ersten und zweiten Sensorposition SP1, SP2 gleichen Abstand hat, d.h. der Mittelpunkt der Verbindungsgeraden.

In Fig. 2 sind ein erster Kreis K1 und ein zweiter Kreis K2 gezeigt, mittels denen die Ellipse E approximiert werden kann. Der erste Kreis K1 weist einen Radius gleich der längeren Halbachse a der Ellipse E auf und tangiert die Ellipse E damit außenseitig, der zweite Kreis K2 weist einen Radius gleich der kürzeren Halbachse b der Ellipse E auf und tangiert die Ellipse E damit innenseitig.

Nachteilig bei diesem Verfahren ist, dass die Approximation der Ellipse E sowohl durch den ersten Kreis K1 als auch durch den zweiten Kreis K2 zu teilweise signifikanten Ungenauigkeiten bei der Entfernungsbestimmung des detektierten Objekts führt. Dadurch kann bei Tracking-Algorithmen keine genaue und stabile Kontur eines Objekts ermittelt werden. Die Ungenauigkeiten vergrößern sich, je weiter die erste und zweite Sensorposition SP1, SP2 voneinander entfernt sind, da sich dadurch die Halbachsen a, b der Ellipse E in ihrer Länge umso mehr unterscheiden.

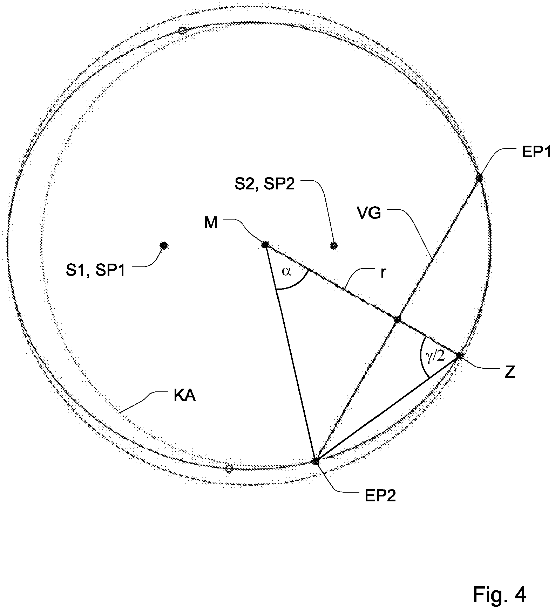

Nachfolgend wird basierend auf den Figuren 3 und 4 ein Verfahren beschrieben, mittels dem die auftretenden Ungenauigkeiten bei der Approximation der Ellipse E durch einen Kreis bzw. ein Kreissegment reduziert werden kann. Dabei wird ein Erfassungsszenario verwendet, das mit dem der Fig. 1 identisch ist.

Zunächst wird ein Ellipsenabschnitt EA der Ellipse E bestimmt, der durch die beiden Sensoren S1 und S2 erfassbar ist. Der Ellipsenabschnitt EA wird basierend auf der Schnittmenge der Erfassungsbereiche EB1, EB2 des ersten und zweiten Sensors S1, S2 bestimmt. Die Erfassungsbereiche EB1, EB2 erzeugen Schnittpunkte mit der Ellipse E. Der Ellipsenabschnitt EA wird durch diejenigen Schnittpunkte bestimmt, die sowohl im ersten als auch im zweiten Erfassungsbereich EB1, EB2 liegen. Der Ellipsenabschnitt EA ist in Fig. 3 durch die verdickt gezeichnete Linie angedeutet. Der Ellipsenabschnitt EA weist einen ersten Ellipsenendpunkt EP1 und einen zweiten Ellipsenendpunkt EP2 auf.

Die nachfolgend beschriebenen Verfahrensschritte dienen dazu, den Ellipsenabschnitt EA durch einen Kreis bzw. ein Kreissegment zu approximieren. In anderen Worten wird damit ein Kreissegment bestimmt, das möglichst gut, d.h. mit möglichst geringen Abweichungen, den Ellipsenabschnitt EA nachbildet.

Zunächst wird, wie in Fig. 4 gezeigt, ein Ellipsenabschnittzwischenpunkt Z ermittelt. Dies erfolgt derart, dass zunächst eine Verbindungsgerade VG zwischen dem ersten Ellipsenendpunkt EP1 und dem zweiten Ellipsenendpunkt EP2 bestimmt wird. Anschließend wird auf diese Verbindungsgerade VG die Mittelsenkrechte gebildet und der Schnittpunkt dieser Mittelsenkrechten mit dem Ellipsenabschnitt EA ermittelt. Dieser Schnittpunkt zwischen der Mittelsenkrechten und dem Ellipsenabschnitt EA bildet den Ellipsenabschnittzwischenpunkt Z.

Anschließend wird ein Kreis bzw. ein Kreisabschnitt KA bestimmt, der durch den ersten Ellipsenendpunkt EP1, den zweiten Ellipsenendpunkt EP2 und den Ellipsenabschnittzwischenpunkt Z verläuft.

Das Dreieck mit den Ecken EP1, EP2 und Z ist ein gleichschenkliges Dreieck, basierend auf dem mit dem Fachmann bekannten geometrischen Zusammenhängen der Radius r des Kreises bzw. der Radius des Kreisabschnitts KA bestimmt werden kann.

Der Radius r ergibt sich insbesondere durch folgende Formel:

$$r = \frac{\sin\frac{\gamma}{2}}{\sin\alpha};$$

Der Mittelpunkt M des Kreises bzw. des Kreisabschnitts KA wird basierend auf dem berechneten Radius r dadurch bestimmt, dass der Punkt auf der Mittelgeraden bestimmt wird, der von dem Ellipsenabschnittzwischenpunkt Z einen Abstand r hat. Es sei angemerkt, dass der Abstand des Mittelpunkts M zur Verbindungsgeraden VG kleiner ist als der Abstand zum Ellipsenabschnittzwischenpunkt Z.

Wie in Fig. 4 zu erkennen ist, liegt der Mittelpunkt M nicht mittig zwischen den Sensorpositionen SP1, SP2, so dass sich die Approximationsgenauigkeit durch das Verfahren verbessert.

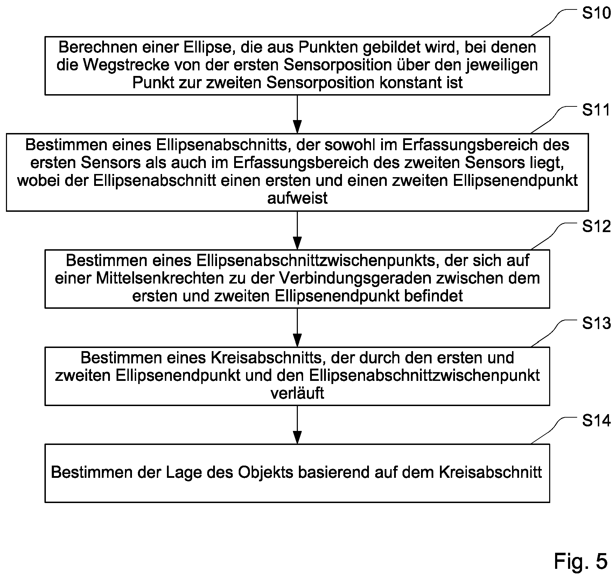

Fig. 5 zeigt ein Diagramm, das die Verfahrensschritte zur Bestimmung der der Lage eines Objekts verdeutlicht.

Nach dem Durchführen eines Sende-Empfangszyklus wird an einem Sensor eine Reflexion empfangen, die aus einem von einem anderen Sensor abgesandten Sendesignal resultiert. Aus der Laufzeit des Signals zwischen dem Absenden und dem Empfangen kann eine Wegstrecke ermittelt werden.

Anschließend erfolgt ein Berechnen zumindest eines Teilbereichs einer Ellipse, wobei die Ellipse durch Punkte gebildet wird, bei denen die Wegstrecke von der ersten Sensorposition über den jeweiligen Punkt zur zweiten Sensorposition konstant ist und der vorgenannten Laufzeit des Signals entspricht (S10).

Daraufhin wird ein Ellipsenabschnitt bestimmt, der sowohl im Erfassungsbereich des ersten Sensors als auch im Erfassungsbereich des zweiten Sensors liegt (S11). Der Ellipsenabschnitt weist einen ersten und einen zweiten Ellipsenendpunkt auf.

Anschließend wird ein Ellipsenabschnittzwischenpunkt bestimmt, der sich auf einer Mittelsenkrechten zu der Verbindungsgeraden zwischen dem ersten und zweiten Ellipsenendpunkt befindet (S12).

Daraufhin wird ein Kreisabschnitt bestimmt, der durch den ersten und zweiten Ellipsenendpunkt und den Ellipsenabschnittzwischenpunkt verläuft (S13).

Zuletzt wird die Lage des Objekts, an dem die Reflexion erfolgt ist, basierend auf dem Kreisabschnitt bestimmt (S14).

Die Erfindung wurde voranstehend an Ausführungsbeispielen beschrieben. Es versteht sich, dass zahlreiche Änderungen sowie Abwandlungen möglich sind, ohne dass dadurch der durch die Patentansprüche definierte Schutzbereich verlassen wird.

Bezugszeichenliste

| | |
|---|---|
| a, b | Halbachsen der Ellipse |
| E | Ellipse |
| EA | Ellipsenabschnitt |
| EB1 | Erfassungsbereich erster Sensor |
| EB2 | Erfassungsbereich zweiter Sensor |
| EP1 | erster Ellipsenendpunkt |
| EP2 | zweiter Ellipsenendpunkt |
| F | Fahrzeug |
| K1 | erster Kreis |
| K2 | zweiter Kreis |
| KA | Kreisabschnitt |
| M | Mittelpunkt |
| O | Objekt |
| r | Radius |
| R | Recheneinheit |
| S1 | erster Sensor |
| S2 | zweiter Sensor |
| SP1 | erste Sensorposition |
| SP2 | zweite Sensorposition |
| VG | Verbindungsgerade |
| Z | Ellipsenabschnittzwischenpunkt |

**Patentansprüche**

1. Verfahren zur Bestimmung der Lage eines Objekts durch eine Sensorik eines Fahrzeugs (F), wobei das Fahrzeug (F) zumindest einen ersten Sensor (S1) mit einer ersten Sensorposition (SP1) und einen zweiten Sensor (S2) mit einer zweiten, von der ersten Sensorposition (SP1) verschiedenen Sensorposition (SP2) aufweist, wobei das Verfahren mit einer Recheneinheit durchgeführt wird und die folgenden Schritte aufweist:

   - Berechnen zumindest eines Teilbereichs einer Ellipse (E), wobei die Ellipse (E) durch Punkte gebildet wird, bei denen die Wegstrecke von der ersten Sensorposition (SP1) über den jeweiligen Punkt zur zweiten Sensorposition (SP2) konstant ist (S10), und die Wegstrecke aus der Laufzeit eines Signals zwischen dem Absenden des Signals durch den ersten Sensor und dem Empfangen des an dem Objekt reflektierten Signals durch den zweiten Sensor ermittelt wird;

**gekennzeichnet durch** die weiteren Schritte:

   - Bestimmen eines Ellipsenabschnitts (EA), der sowohl im Erfassungsbereich (EB1) des ersten Sensors (S1) als auch im Erfassungsbereich (EB2) des zweiten Sensors (S2) liegt, wobei der Ellipsenabschnitt (EA) einen ersten und einen zweiten Ellipsenendpunkt (EP1, EP2) aufweist (S11);

   - Bestimmen eines Ellipsenabschnittzwischenpunkts (Z), der sich auf einer Mittelsenkrechten zu der Verbindungsgeraden zwischen dem ersten und zweiten Ellipsenendpunkt (EP1, EP2) befindet (S12);
   - Bestimmen eines Kreises oder eines Kreisabschnitts (KA), der durch den ersten und zweiten Ellipsenendpunkt (EP1, EP2) und den Ellipsenabschnittzwischenpunkt (Z) verläuft (S13); und
   - Bestimmen der Lage des Objekts basierend auf dem Kreis oder dem Kreisabschnitt (KA) (S14).

2. Verfahren nach Anspruch 1, **dadurch gekennzeichnet, dass** sich der Ellipsenabschnitt (EA) entlang des gesamten Überdeckungsbereichs des Erfassungsbereich (EB1) des ersten Sensors (S1) mit dem Erfassungsbereich (EB2) des zweiten Sensors (S2) erstreckt.

3. Verfahren nach Anspruch 1 oder 2, **dadurch gekennzeichnet, dass** das Bestimmen des Kreisabschnitts (KA) ein Berechnen des Radius (r) des Kreises oder des Kreisabschnitts (KA) und ein Bestimmen eines Mittelpunkts (M) dieses Kreises oder dieses Kreisabschnitts (KA) umfasst.

4. Verfahren nach einem der vorhergehenden Ansprüche, **dadurch gekennzeichnet, dass** der Mittelpunkt (M) des Kreises oder Kreisabschnitts (KA) dadurch bestimmt wird, dass derjenige Punkt auf der Mittelsenkrechten zu der Verbindungsgerade zwischen dem ersten und zweiten Ellipsenendpunkt (EP1, EP2) bestimmt wird, der einen Abstand gleich dem Radius (r) des Kreises oder des Kreisabschnitts (KA) zu dem Ellipsenabschnittzwischenpunkt (Z) aufweist.

5. Verfahren nach einem der vorhergehenden Ansprüche, **dadurch gekennzeichnet, dass** der erste und zweite Sensor (S1, S2) ein Ultraschallsensor ist.

6. Verfahren nach einem der vorhergehenden Ansprüche, **dadurch gekennzeichnet, dass** die Position des Objekts relativ zum Fahrzeug (F) durch iteratives Wiederholen der Verfahrensschritte eines der vorhergehenden Ansprüche über mehrere Sende- und Empfangszyklen des ersten und zweiten Sensors (S1, S2) hinweg bestimmt wird.

**7.** System zur Bestimmung der Lage eines Objekts umfassend eine an einem Fahrzeug (F) angeordnete Sensorik, wobei die Sensorik zumindest einen ersten Sensor (S1) mit einer ersten Sensorposition (SP1) und einen zweiten Sensor (S2) mit einer zweiten, von der ersten Sensorposition (SP1) verschiedenen Sensorposition (SP2) aufweist, wobei das System eine Recheneinheit (R) aufweist, die dazu konfiguriert ist, die folgenden Schritte zu vollziehen:

- Berechnen zumindest eines Teilbereichs einer Ellipse (E), wobei die Ellipse (E) durch Punkte gebildet wird, bei denen die Wegstrecke von der ersten Sensorposition (SP1) über den jeweiligen Punkt zur zweiten Sensorposition (SP2) konstant ist, und die Wegstrecke aus der Laufzeit eines Signals zwischen dem Absenden des Signals durch den ersten Sensor und dem Empfangen des an dem Objekt reflektierten Signals durch den zweiten Sensor ermittelt wird;

**gekennzeichnet durch** die weiteren Schritte:

- Bestimmen eines Ellipsenabschnitts (EA), der sowohl im Erfassungsbereich (EB1) des ersten Sensors (S1) als auch im Erfassungsbereich (EB2) des zweiten Sensors (S2) liegt, wobei der Ellipsenabschnitt (EA) einen ersten und einen zweiten Ellipsenendpunkt (EP1, EP2) aufweist;

- Bestimmen eines Ellipsenabschnittzwischenpunkts (Z), der sich auf einer Mittelsenkrechten zu der Verbindungsgerade zwischen dem ersten und zweiten Ellipsenendpunkt (EP1, EP2) befindet;
- Bestimmen eines Kreises oder Kreisabschnitts (KA), der durch den ersten und zweiten Ellipsenendpunkt (EP1, EP2) und den Ellipsenabschnittzwischenpunkt (Z) verläuft; und
- Bestimmen der Lage des Objekts basierend auf dem Kreis oder dem Kreisabschnitt (KA).

**8.** System nach Anspruch 7, **dadurch gekennzeichnet, dass** sich der Ellipsenabschnitt (EA) entlang des gesamten Überdeckungsbereichs des Erfassungsbereichs (EB1) des ersten Sensors (S1) mit dem Erfassungsbereich (EB2) des zweiten Sensors (S2) erstreckt.

**9.** System nach Anspruch 7 oder 8, **dadurch gekennzeichnet, dass** die Recheneinheit (R) dazu konfiguriert ist, den Kreis oder den Kreisabschnitt (KA) dadurch zu bestimmen, dass ein Radius (r) des Kreises oder des Kreisabschnitts (KA) berechnet und ein Mittelpunkt (M) dieses Kreises oder dieses Kreisabschnitts (KA) bestimmt wird.

**10.** System nach Anspruch 9, **dadurch gekennzeichnet, dass** die Recheneinheit (R) dazu konfiguriert ist, den Mittelpunkt (M) des Kreises oder des Kreisabschnitts (KA) dadurch zu bestimmen, dass derjenige Punkt auf der Mittelsenkrechten zu der Verbindungsgeraden zwischen dem ersten und zweiten Ellipsenendpunkt (EP1, EP2) bestimmt wird, der einen Abstand gleich dem Radius (r) des Kreises oder des Kreisabschnitts (KA) zu dem Ellipsenabschnittzwischenpunkt (Z) aufweist.

**11.** System nach einem der Ansprüche 7 bis 10, **dadurch gekennzeichnet, dass** der erste und zweite Sensor (S1, S2) ein Ultraschallsensor ist.

**12.** System nach einem der Ansprüche 7 bis 11, **dadurch gekennzeichnet, dass** die Recheneinheit (R) dazu ausgebildet ist, die Position eines Objekts relativ zum Fahrzeug (F) durch iteratives Bestimmen eines Kreises oder eines Kreisabschnitts (KA) über mehrere Sende- und Empfangszyklen des ersten und zweiten Sensors (S1, S2) hinweg zu ermitteln.

**Claims**

**1.** Method for determining the situation of an object by means of a sensor system of a vehicle (F), the vehicle (F) having at least one first sensor (S1) with a first sensor position (SP1) and a second sensor (S2) with a second sensor position (SP2), which is different from the first sensor position (SP1), wherein the method is performed using a computing unit and has the following steps:

- calculating at least a subregion of an ellipse (E), the ellipse (E) being formed by points for which the distance from the first sensor position (SP1) via the respective point to the second sensor position (SP2) is constant (S10), and the distance being ascertained from the propagation time of a signal between the sending of the signal by the first sensor and the receiving of the signal reflected from the object by the second sensor; **characterized by** the further steps of:

- determining an elliptical segment (EA) situated both within the detection range (EB1) of the first sensor (S1) and within the detection range (EB2) of the second sensor (S2), the elliptical segment (EA) having a first and a second ellipse end (EP1, EP2) (S11);
- determining an elliptical segment intermediate point (Z) located on a perpendicular bisector of the connecting line between the first and second ellipse ends (EP1, EP2) (S12);
- determining a circle or a circular segment (KA) that passes through the first and second ellipse ends (EP1, EP2) and the elliptical segment intermediate point (Z) (S13); and
- determining the situation of the object on the basis of the circle or the circular segment (KA) (S14).

2. Method according to Claim 1, **characterized in that** the elliptical segment (EA) extends along the entire region of overlap of the detection range (EB1) of the first sensor (S1) and the detection range (EB2) of the second sensor (S2).

3. Method according to Claim 1 or 2, **characterized in that** the determination of the circular segment (KA) comprises a calculation of the radius (r) of the circle or the circular segment (KA) and a determination of a centre (M) of this circle or this circular segment (KA).

4. Method according to one of the preceding claims, **characterized in that** the centre (M) of the circle or circular segment (KA) is determined by determining that point on the perpendicular bisector of the connecting line between the first and second ellipse ends (EP1, EP2) which is at a distance equal to the radius (r) of the circle or the circular segment (KA) from the elliptical segment intermediate point (Z).

5. Method according to one of the preceding claims, **characterized in that** the first and second sensors (S1, S2) are ultrasonic sensors.

6. Method according to one of the preceding claims, **characterized in that** the position of the object relative to the vehicle (F) is determined by iteratively repeating the method steps of one of the preceding claims over multiple transmission and reception cycles of the first and second sensors (S1, S2).

7. System for determining the situation of an object comprising a sensor system arranged on a vehicle (F), the sensor system having at least one first sensor (S1) with a first sensor position (SP1) and a second sensor (S2) with a second sensor position (SP2), which is different from the first sensor position (SP1), wherein the system has a computing unit (R) configured to perform the following steps:

    - calculating at least a subregion of an ellipse (E), the ellipse (E) being formed by points for which the distance from the first sensor position (SP1) via the respective point to the second sensor position (SP2) is constant, and the distance being ascertained from the propagation time of a signal between the sending of the signal by the first sensor and the receiving of the signal reflected from the object by the second sensor; **characterized by** the further steps of:

    - determining an elliptical segment (EA) situated both within the detection range (EB1) of the first sensor (S1) and within the detection range (EB2) of the second sensor (S2), the elliptical segment (EA) having a first and a second ellipse end (EP1, EP2);
    - determining an elliptical segment intermediate point (Z) located on a perpendicular bisector of the connecting line between the first and second ellipse ends (EP1, EP2);
    - determining a circle or circular segment (KA) that passes through the first and second ellipse ends (EP1, EP2) and the elliptical segment intermediate point (Z); and
    - determining the situation of the object on the basis of the circle or the circular segment (KA).

8. System according to Claim 7, **characterized in that** the elliptical segment (EA) extends along the entire region of overlap of the detection range (EB1) of the first sensor (S1) and the detection range (EB2) of the second sensor (S2).

9. System according to Claim 7 or 8, **characterized in that** the computing unit (R) is configured to determine the circle or the circular segment (KA) by calculating a radius (r) of the circle or the circular segment (KA) and determining a centre (M) of this circle or this circular segment (KA).

10. System according to Claim 9, **characterized in that** the computing unit (R) is configured to determine the centre (M) of the circle or the circular segment (KA) by determining that point on the perpendicular bisector of the connecting line between the first and second ellipse ends (EP1, EP2) which is at a distance equal to the radius (r) of the circle or the circular segment (KA) from the elliptical segment intermediate point (Z).

11. System according to one of Claims 7 to 10, **characterized in that** the first and second sensors (S1, S2) are ultrasonic sensors.

12. System according to one of Claims 7 to 11, **char-**

**acterized in that** the computing unit (R) is designed to ascertain the position of an object relative to the vehicle (F) by iteratively determining a circle or a circular segment (KA) over multiple transmission and reception cycles of the first and second sensors (S1, S2).

**Revendications**

1. Procédé pour déterminer la position d'un objet au moyen d'un système de capteurs d'un véhicule (F), le véhicule (F) comportant au moins un premier capteur (S1) avec une première position de capteur (SP1) et un deuxième capteur (S2) avec une deuxième position de capteur (SP2) différente de la première position de capteur (SP1), le procédé étant mis en œuvre avec une unité de calcul et comportant les étapes suivantes :

   - calculer au moins une partie d'une ellipse (E), l'ellipse (E) étant formée par des points pour lesquels la distance entre la première position du capteur (SP1) et la deuxième position du capteur (SP2) en passant par le point respectif est constante (S10), et la distance est déterminée à partir du temps de propagation d'un signal entre l'émission du signal par le premier capteur et la réception du signal réfléchi par l'objet par le deuxième capteur ; **caractérisé par** les étapes supplémentaires suivantes :

      - déterminer une section d'ellipse (EA) qui se trouve à la fois dans la zone de détection (EB1) du premier capteur (S1) et dans la zone de détection (EB2) du deuxième capteur (S2), la section d'ellipse (EA) présentant un premier et un deuxième points d'extrémité d'ellipse (EP1, EP2) (S11) ;
      - déterminer un point intermédiaire de la section d'ellipse (Z) qui se trouve sur une médiatrice de la droite reliant les premier et deuxième points d'extrémité de l'ellipse (EP1, EP2) (S12) ;
      - déterminer un cercle ou un segment de cercle (KA) qui passe par les premier et deuxième points d'extrémité de l'ellipse (EP1, EP2) et le point intermédiaire de la section d'ellipse (Z) (S13) ; et
      - déterminer la position de l'objet sur la base du cercle ou du segment de cercle (KA) (S14).

2. Procédé selon la revendication 1, **caractérisé en ce que** le segment d'ellipse (EA) s'étend sur toute la zone de recouvrement de la zone de détection (EB1) du premier capteur (S1) par la zone de détection (EB2) du deuxième capteur (S2).

3. Procédé selon la revendication 1 ou la revendication 2, **caractérisé en ce que** la détermination du segment de cercle (KA) comprend un calcul du rayon (r) du cercle ou du segment de cercle (KA) et une détermination d'un centre (M) de ce cercle ou de ce segment de cercle (KA).

4. Procédé selon l'une des revendications précédentes, **caractérisé en ce que** le centre (M) du cercle ou du segment de cercle (KA) est déterminé en déterminant le point sur la médiatrice de la droite reliant les premier et deuxième points d'extrémité de l'ellipse (EP1, EP2) qui présente une distance égale au rayon (r) du cercle ou du segment de cercle (KA) par rapport au point intermédiaire (Z) du segment d'ellipse.

5. Procédé selon l'une des revendications précédentes, **caractérisé en ce que** les premier et deuxième capteurs (S1, S2) sont des capteurs à ultrasons.

6. Procédé selon l'une des revendications précédentes, **caractérisé en ce que** la position de l'objet par rapport au véhicule (F) est déterminée en répétant de manière itérative les étapes du procédé selon l'une des revendications précédentes sur plusieurs cycles d'émission et de réception des premier et deuxième capteurs (S1, S2).

7. Système pour déterminer la position d'un objet comprenant un système de capteurs agencé sur un véhicule (F), le système de capteurs comprenant au moins un premier capteur (S1) avec une première position de capteur (SP1) et un deuxième capteur (S2) avec une deuxième position de capteur (SP2) différente de la première position de capteur (SP1), le système comprenant une unité de calcul (R) configurée pour mettre en œuvre les étapes suivantes :

   - calculer au moins une partie d'une ellipse (E), l'ellipse (E) étant formée par des points pour lesquels la distance entre la première position du capteur (SP1) et la deuxième position du capteur (SP2) en passant par le point respectif est constante, et la distance étant déterminée à partir du temps de propagation d'un signal entre l'émission du signal par le premier capteur et la réception du signal réfléchi par l'objet par le deuxième capteur ; **caractérisé par** les étapes supplémentaires suivantes :

      - déterminer une section d'ellipse (EA) qui se trouve à la fois dans la zone de détection (EB1) du premier capteur (S1) et dans la zone de détection (EB2) du deuxième capteur (S2), la section d'ellipse (EA) présentant un premier et un deuxième points d'extrémité de l'ellipse (EP1, EP2) ;

- déterminer un point intermédiaire de la section d'ellipse (Z) qui se trouve sur une médiatrice de la droite reliant les premier et deuxième points d'extrémité de l'ellipse (EP1, EP2) ;
- déterminer un cercle ou une section de cercle (KA) qui passe par les premier et deuxième points d'extrémité de l'ellipse (EP1, EP2) et le point intermédiaire de la section d'ellipse (Z) ; et
- déterminer la position de l'objet sur la base du cercle ou du segment de cercle (KA).

8. Système selon la revendication 7, **caractérisé en ce que** le segment d'ellipse (EA) s'étend sur toute la zone de recouvrement de la zone de détection (EB1) du premier capteur (S1) par la zone de détection (EB2) du deuxième capteur (S2).

9. Système selon la revendication 7 ou la revendication 8, **caractérisé en ce que** l'unité de calcul (R) est configurée pour déterminer le cercle ou le segment de cercle (KA) en calculant un rayon (r) du cercle ou du segment de cercle (KA) et en déterminant un centre (M) de ce cercle ou de ce segment de cercle (KA).

10. Système selon la revendication 9, **caractérisé en ce que** l'unité de calcul (R) est configurée pour déterminer le centre (M) du cercle ou du segment de cercle (KA) en déterminant le point sur la médiatrice de la droite reliant les premier et deuxième points d'extrémité de l'ellipse (EP1, EP2) qui présente une distance égale au rayon (r) du cercle ou du segment de cercle (KA) par rapport au point intermédiaire (Z) du segment d'ellipse.

11. Système selon l'une des revendications 7 à 10, **caractérisé en ce que** les premier et deuxième capteurs (S1, S2) sont des capteurs à ultrasons.

12. Système selon l'une des revendications 7 à 11, **caractérisé en ce que** l'unité de calcul (R) est conçue pour déterminer la position d'un objet par rapport au véhicule (F) en déterminant de manière itérative un cercle ou un segment de cercle (KA) sur plusieurs cycles d'émission et de réception des premier et deuxième capteurs (S1, S2).

S2

S1

R

F

Fig. 1

Fig. 2

Fig. 3

Fig. 4

S10

Berechnen einer Ellipse, die aus Punkten gebildet wird, bei denen die Wegstrecke von der ersten Sensorposition über den jeweiligen Punkt zur zweiten Sensorposition konstant ist

S11

Bestimmen eines Ellipsenabschnitts, der sowohl im Erfassungsbereich des ersten Sensors als auch im Erfassungsbereich des zweiten Sensors liegt, wobei der Ellipsenabschnitt einen ersten und einen zweiten Ellipsenendpunkt aufweist

S12

Bestimmen eines Ellipsenabschnittzwischenpunkts, der sich auf einer Mittelsenkrechten zu der Verbindungsgeraden zwischen dem ersten und zweiten Ellipsenendpunkt befindet

S13

Bestimmen eines Kreisabschnitts, der durch den ersten und zweiten Ellipsenendpunkt und den Ellipsenabschnittzwischenpunkt verläuft

S14

Bestimmen der Lage des Objekts basierend auf dem Kreisabschnitt

Fig. 5

## IN DER BESCHREIBUNG AUFGEFÜHRTE DOKUMENTE

### In der Beschreibung aufgeführte Patentdokumente

- DE 102016105022 A1

- WO 2020012852 A1

### In der Beschreibung aufgeführte Nicht-Patentliteratur

- **D. BANK** ; **T. KAMPKE**. High-Resolution Ultrasonic Environment Imaging. *IEEE Transactions on Robotics*, April 2007, vol. 23 (2), 370-381